(19) Europäisches Patentamt
European Patent Office
Office européen des brevets

(11) **EP 0 398 678 B1**

(12) **EUROPEAN PATENT SPECIFICATION**

(45) Date of publication and mention
of the grant of the patent:
**09.07.1997 Bulletin 1997/28**

(51) Int Cl.6: **G06F 15/16**

(21) Application number: **90305265.2**

(22) Date of filing: **16.05.1990**

(54) **Optimized interconnect systems**

Optimierte Verbindungssysteme

Systèmes d'interconnexion optimisés

(84) Designated Contracting States:
**AT BE CH DE DK ES FR GB GR IT LI LU NL SE**

(30) Priority: **19.05.1989 US 354139**

(43) Date of publication of application:
**22.11.1990 Bulletin 1990/47**

(73) Proprietor: **STRATUS COMPUTER, INC.**
**Marlboro Massachusetts 01752 (US)**

(72) Inventors:
 • **Baty, Kurt, F.**
   **Medway, Massachusetts 02053 (US)**
 • **Horvath, Charles J., Jr.**
   **Boston, Massachusetts 02118 (US)**
 • **Clemson, Richard C.**
   **Marlboro Massachusetts 01752 (US)**
 • **Bleiweiss, Scott J.**
   **Wrentham, Massachusetts 02093 (US)**
 • **Wolff, Kenneth T.**
   **Harvard, Massachusetts 01451 (US)**

(74) Representative: **Greenwood, John David et al**
**Graham Watt & Co.**
**Riverhead**
**Sevenoaks Kent TN13 2BN (GB)**

(56) References cited:
 **EP-A- 0 301 499          GB-A- 2 064 839**

 • **IEEE TRANSACTIONS ON COMPUTERS, vol. 37,
   no. 11, November 1988, NEW YORK, US; pages
   1468 - 1470; D.B.SKILLICORN: 'A New Class of
   Fault-Tolerant Static Interconnection Networks'**
 • **PROCEEDINGS OF THE 12TH ANNUAL INTL.
   COMPUTER SOFTWARE & APPLICATIONS
   CONFERENCE, October 1988, CHICAGO, US;
   pages 268 - 269; G.J.LIPOVSKI: 'SIMD and MIMD
   Processing in the Texas Reconfigurable Array
   Computer'**

## Description

Background of the Invention

This invention relates to interconnection networks and, more particularly, networks providing optimized communication pathways in multinodal systems. The invention has application, by way of example, in bus structures of multiprocessor digital data processing systems.

The art discloses a number of structures for connecting elements within multinodal systems. A wide variety of such arrangements are used in the digital data processing field, where designers have gone to great lengths to devise mechanism for coupling system functional units, e.g., central processors, memories and input/output controllers, to achieve maximum throughput and other desired characteristics.

One prior art approach, the so-called multiport system, utilizes separate buses to connect individual shared memory units and multiple processing units. In a multiport system having four processors and four memory units, for example, every processor has its own dedicated bus. Each of these buses is connected to the individual memory units. Interface modules having four ports are provided on the memory units to oversee communications between them and the processors and, particularly, to control which processor has access to the associated memory at any given moment.

In prior art crossbar systems, a switching array is interposed between functional units to establish temporary communication paths. Nodes within the system, e. g., the central processing units, peripheral control units, and memory modules, have their own dedicated buses which are interconnected in the form of a grid with switches at each intersection. These switches respond to command and address signal received from the nodes to open communication paths formed on a transaction-by-transaction basis. Once a transaction is completed, its pathway is closed, leaving that portion of the grid accessible by the other units.

The "common bus" system employs a single system bus to handle communications between multiple nodes. A multiprocessor system having a plurality of central processors sharing a single memory module, for example, permits only one processor at a time to transfer information with the memory module. Other processors requiring access to the memory unit wait their turn and arbitrate for the bus before proceeding. The related dual-bus system utilizes a main system bus to connect a set of local common bus-type systems. A controller unit interfaces each local network to the main bus, transferring signals between them as required.

These prior art approaches have a number of drawbacks. The multiport and crossbar networks, although offering a high transmission bandwidth, become unduly complex and costly as the number of nodes increase. The common-bus and dual-bus systems, while less hardware intensive, form bottlenecks at their shared resources, e.g., the main system bus and memory and, therefore, have relatively narrow transmission bandwidths.

In view of the foregoing, an object of this invention is to provide an improved system for connecting processing elements of a multinodal system. Another object of the invention is to provide an improved structure for linking multiple nodes of computing and signal processing systems. A further object is to provide a multinodal computing and signal processing system which maximizes communication bandwidth and minimizes hardware cost and complexity. Still another object is to provide an improved bus structure for a digital data processing system.

GB-A-2,064,839 discloses an apparatus according to the preamble of claim 1 and, in particular, a multiprocessor system for processing digital data comprising a plurality of P(≥4) buses *a, b, c, d* and a plurality of P(P-1)/2 processor stations, each connected to a different pair of buses. Each station is thus directly connected to 2(P-2) stations over one or other of its two buses and indirectly connected through a single station acting as a relay to (P-2)(P-3)/2. The buses have addresses 1 to P and each station is given one complete address formed by the concatenation in any order to the addresses of the two buses to which it is connected and two incomplete addresses formed by the addresses of the two buses to which it is connected. When detecting its complete address a station behaves as an addressee station by making a connection to the bus over which the complete address was received and when detecting one of its two incomplete addresses a station behaves as a relay station by interconnecting its two buses.

The present invention is characterized by the features of the characterizing portion of claim 1.

Summary of the Invention

These objects are attained by the invention, which provides in one aspect, a multinodal system having a plurality of nodes for performing operations. The system may be, for instance, a multiprocessing digital data processor with nodes, e.g., central processing units, peripheral controllers and memory units, which perform calculations, execute system control functions, communicate with peripheral devices, store and retrieve data.

The nodes are connected to one another over a plurality of individual connection elements, e.g., bus lines, which provide an independent pathway for handling communications between the nodes.

The connection elements are configured in a sparse interconnect array so that every node in the system can communicate directly with every other node over a dedicated, independent connection element and so that no one of the connection elements connects all the nodes together.

Thus, for example, in a multiprocessor system constructed in accord with the invention, seven independent bus lines interconnect seven processing nodes in a configuration arranged so that each bus line directly connects only four nodes, and so that every node can communicate directly with every other node through each of two direct bus lines.

Every node of a multinodal system constructed in accord with the invention has a set of ports that couples, or interfaces, the node with its associated connection elements. In a data processing environment, for example, these ports transfer digital signals between a functional unit and its associated bus lines. To illustrate, each node of an exemplary multiprocessor having seven independent buses and seven nodes has four ports coupling that node to its associated buses.

A multinodal system constructed in accord with the invention may be one-way interconnected, two-way interconnected or, more generally, (n)-way interconnected, where (n) is an integer. In a one-way interconnected system, only one connection element couples any two nodes. Or, put another way, only one communication path exists between every node and every other node. A two-way interconnected system, on the other hand, has two connection elements coupling each pair of nodes. Likewise, an (n)-way interconnected system provides (n) independent connection paths between each pair. Two-way and (n)-way interconnect arrays may be adapted for use in fault-tolerant communications.

According to a further aspect of the invention, the configuration of connection elements used to interconnect ports may derive from the solution set of mathematical constructs referred to as incomplete balanced block design solutions. That configuration, moreover, can be arranged to optimize communications over the interconnect structure. As applied to computers, for example, the connection elements, or bus lines, can be configured to take port-to-port paths which ensure that each bus is of approximately the same length.

These and other aspects of the invention are evident in the description which follows.

Brief Description of the Drawings

A more complete understanding of the invention may be obtained by reference to the drawings, in which:

Figure 1 depicts a one-way interconnect bus array for coupling the nodes of a digital data processing system constructed in accord with the invention;

Figure 2 depicts a sparse bus array providing a two-way interconnect between four nodes of a digital data processing system constructed in accord with the invention;

Figure 3 depicts a sparse bus array providing a two-way interconnect between seven nodes of a digital data processing system constructed in accord with the invention;

Figure 4 depicts a preferred configuration of the array shown in Figure 3 optimized so that the bus lines are of substantially the same length;

Figure 5 depicts a digital data processor with a sparse bus array configured similarly to that shown in Figure 4, but having only six nodes; and

Figure 6 depicts a digital data processor with redundant functional units having a sparse bus array configured similarly to that of Figure 4.

Detailed Description of the Illustrated Embodiment

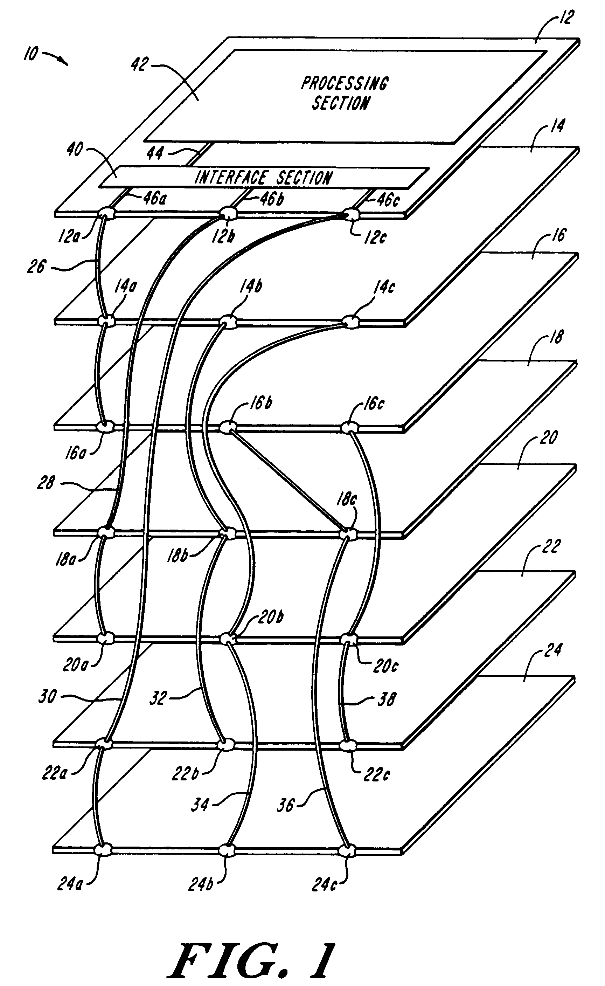

Figure 1 depicts a digital data processing system 10 constructed in accord with one aspect of the invention. The illustrated system 10 includes seven nodes 12, 14, 16, 18, 20, 22, 24 coupled to one another by a one-way interconnect structure formed by seven buses 26, 28, 30, 32, 34, 36, 38. The buses connect every node in the system to every other node so that (1) each node is connected with each other node by at least one bus, (2) no single node is connected to all other nodes by a single bus, and (3) at least one of the buses is connected to three or more nodes.

Referring to the drawing, node 12 is connected to nodes 14 and 16 by bus 26, to nodes 18 and 20 by bus 28, and to nodes 22 and 24 by bus 30. Node 14 likewise communicates directly with node 12 and 16 over bus 26, with nodes 18 and 22 over bus 32, and with nodes 20 and 24 over bus 34. Nodes 16 - 24 are similarly connected by a single communication path to each of the other nodes.

Buses 26, 28, 30, 32, 34, 36, 38 are independent, that is, they are not directly coupled to another. Each bus is thus capable of carrying communications independently of the others and, accordingly, each node can transmit and receive information over any of its associated buses independently of any communications taking place on the other buses. In this regard, the term associated refers to those buses which are connected to a node (e.g., in Figure 1, buses 26, 28 and 30 are illustrated as being associated with node 12).

Nodes 12 - 24 have three ports apiece, designated 12a, 12b, 12c, . . ., and 24a, 24b, and 24c, which couple them to their associated buses. Thus, for example, node 12 is connected to bus 26 via port 12, to bus 28 via port 12b, and to bus 30 via port 12c. In a similar manner, the three illustrated ports on each of the other nodes couple them and their associated buses.

The bus configuration shown in Figure 1 can be represented in tabular form as shown below:

Table 1

| | | Port | | |
| --- | --- | --- | --- | --- |
| | | a | b | c |
| Node | A | 1 | 2 | 3 |
| | B | 1 | 4 | 5 |
| | C | 1 | 6 | 7 |
| | D | 2 | 4 | 6 |
| | E | 2 | 5 | 7 |
| | F | 3 | 4 | 7 |
| | G | 3 | 5 | 6 |

In the table, nodes 12 - 24 are represented by upper case letters "A" - "G," respectively, buses 26 - 38, by numerical designations "1" - "7"; ports 12a - 24a, by the column labelled "a", ports 12b - 24b, by the column labelled "b"; and ports 12c - 24c, under the column labelled "c."

Referring to Table 1 (and corresponding Figure 1) the configuration of the sparse bus array is described as follows: bus #1 interconnects nodes A, B and C at each of their respective ports "a" (in the illustration, bus 26 interconnects nodes 12, 14 and 16 via ports 12a, 14a and 16a); bus #2 interconnects nodes A, D and E via ports "b," "a" and "a," respectively (bus 28 interconnects nodes 12, 18 and 20 via ports 12b, 18a and 20a); bus #3 interconnects nodes A, F and G via nodes "c," "a" and "a," respectively (bus 30 interconnects nodes 12, 22 and 24 via ports 12c, 22a and 24a); and so forth.

The illustrated sparse bus array, providing a one-way interconnect for connecting seven nodes, each having three ports, via seven independent buses, is understood to be a member of at least one larger class of related one-way interconnect structures. That class can be characterized, in part, by the relationship between the number of independent buses ($b$), the number of ports ($r$), and the number of nodes ($v$), to wit,

$$b = \frac{r \times v}{\frac{(v-1)}{r} + 1} \qquad \text{Eq. 1}$$

Thus, for example, a system constructed in accord with this aspect of the invention may have three ports, seven nodes and seven independent buses; four ports, nine nodes and twelve independent buses, etc.

In one embodiment of the invention, nodes 12 - 24 represent the functional units of a digital data processing system. Thus, for example, nodes 12, 14 and 16 can represent three central processing units, node 18 can be a network interface, nodes 20 and 22 can be peripheral controllers, and node 24 can be a shared random access memory unit. Signal processing functions performed by each of these nodes 12 - 24 are handled by a processing logic section in each node. One such section is shown as element 42 in node 12 of Figure 1. By way of illustration, these logic sections can be constructed and operated in general accord with the teachings of the United States Patent No. 4,654,857 and United States Patent Applications Nos. 927,746, 003,732, 018,629, 079,297, 227,471, which are assigned to the assignee hereof. The teachings of the patents and patent applications are incorporated herein by reference.

In a preferred embodiment, each node 12 - 24 includes both a central processing unit section and a random access memory unit section. The latter, while primarily associated with the central processing unit in the same node, can also be accessed by the central processing units in the other nodes.

Each node in the illustrated embodiment includes circuitry which serves to interface its processing logic section and ports. Referring to Figure 1, exemplary node 12 includes interface circuitry 40 providing an interface between logic section 42 and ports 12a, 12b and 12c. The interface circuitry 40 is connected to the processing section by an internal bus line 44 which is multiplexed to carry addressing and data signals, as well as command signals.

During command or data transmission, interface circuitry 40 within the sending node monitors addressing signals generated by its associated processing logic section 42. Those signals determine which port to send the communications from. For example, communications sent by node 12 addressing nodes 14 or 16 are routed by circuitry 40 through port 12a to bus 26, while those addressing nodes 22 or 24 are routed through port 12c to bus 30. Illustrated interface circuity 40 also continuously monitors the bus lines 26, 28 and 30 to determine whether the information they carry is directed addressed to the associated node 12. If so, the circuitry 40 passes that information on to the processing section 42.

In a preferred embodiment of the invention, logic within each interface section 40 generates a signal which determines the specific output port for communications from the associated node. That logic takes as input signals representative of the node number, or slot identification, of each of the sending unit and the receiving unit.

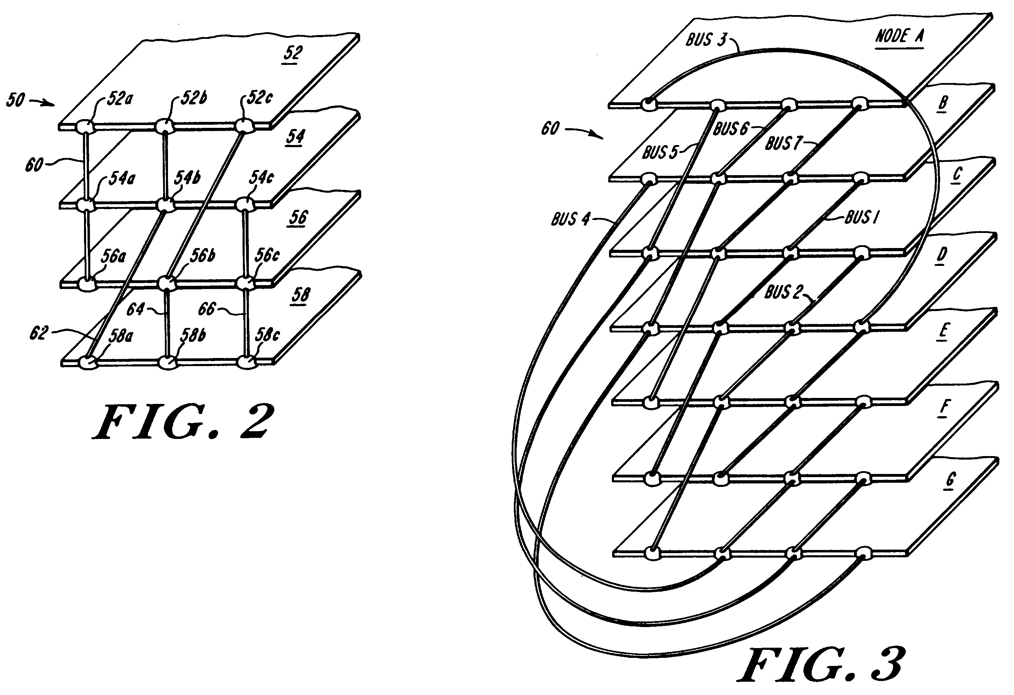

Figure 2 depicts a sparse bus array 50 providing a two-way interconnect between nodes of a digital data processing system constructed in accord with the invention. The illustration does not show the internal structure of the nodes, which may be constructed and operated similarly to those discussed above.

Sparse bus array 50 has four nodes 52- 58, each with three ports 52a, 52b, 52c, . . ., and 58a, 58b, 58c. The nodes 52 - 58 are interconnected by four buses 60 - 66 in such a manner that there exist two independent communication paths between each pair of nodes.

As before, the buses of interconnect array 50 are arranged to connect every node to every other node so that (1) each node is connected with each other node by two buses; (2) no single node is connected to all other nodes by a single bus; and (3) at least one of the buses is connected to three of the nodes.

The configuration of buses and ports in structure 50 is presented in tabular form below. As before, the nodes 52 - 58 are represented by uppercase letters "A" - "D," respectively; ports 52a - 58a, . . ., and 52d - 58d, by columns headed with lowercase letters "a" - "c," respectively; and buses 60 - 66, by numerals 1 - 4, respectively.

Table 2

| | | Port | | |
|---|---|---|---|---|
| | | a | b | c |
| Node | A | 1 | 2 | 3 |
| | B | 1 | 2 | 4 |
| | C | 1 | 3 | 4 |
| | D | 2 | 3 | 4 |

Table 2 reflects the configuration of a corresponding system, shown in Figure 2, in the manner described above. For example, the table reveals that bus #1 interconnects nodes A, B and C via their respective ports "a" or, alternatively, the corresponding structure in Figure 2 shows that bus 60 interconnects nodes 52 - 56, via ports 52a - 56a.

The illustrated embodiment is understood to be a member of at least one larger class of related two-way interconnect structures. That known class may also be characterized, in part, by the relationship between the number of independent buses ($b$), the number of nodes ($v$), and the number of ports ($r$), to wit,

$$b = \frac{r \times v}{\frac{2(v-1)}{r} + 1} \qquad \text{Eq. 2}$$

Thus, for example, a system constructed in accord with this aspect of the invention may have three ports, four nodes, and four independent buses; four ports, seven nodes, and seven independent buses; five ports and eleven independent buses.

More generally, the systems constructed in accord with this aspect of the invention are characteristic in that the relationship between the number of independent buses ($b$), the number of nodes ($v$), the number of ports ($r$), and the degree of interconnectedness ($n$) can be expressed by the equation

$$b = \frac{r \times v}{\frac{n \times (v-1)}{r} + 1} \qquad \text{Eq. 3}$$

For a one-way interconnect system, ($n$) is one; for a two-way system, ($n$) is two; and so forth.

While, the smaller interconnect structures shown in Figures 1 and 2, and reflected in Tables 1 and 2, can be designed "by hand," or on computer, by trial-and-error, it has been found that the results of studies conducted in a branch of mathematics known as combinatorial theory and, particularly, the field of block designs can be used to derive more rapidly configurations for the larger interconnect structures.

The block design studies are understood to provide specific solutions to problems of arranging ($v$) distinct objects into ($b$) blocks such that each block contains exactly ($k$) distinct objects, each occurring in exactly ($r$) different blocks, and every pair of distinct objects occurs together in exactly ($n$) blocks. Sets of those solutions, referred to as "balanced incomplete block designs," are disclosed in Bose, "On the Construction of Balanced Incomplete Block Designs,", Annals of Eugenics, (1939) and Hall, Jr., Combinatorial Theory (2nd ed., 1986). Those skilled in the art will appreciate that solutions for all values of ($b$), ($r$) and ($v$) otherwise meeting the constraints of Eqs. (1), (2) and (3) are not presently known.

In applying these block design solutions to interconnect array configurations, it has been ascertained that the parameter ($v$) is to be treated as the number of nodes; the parameter ($k$), as the number of loads per bus (i.e., the number of nodes to which each bus is attached); the parameter ($b$), as the number of buses; and the parameter ($r$), as the number of ports. As indicated above, ($n$) is to be treated as the degree of interconnectedness.

A subset of the aforementioned solutions are referred to as symmetric and satisfy the additional constraint that $v = b$ and $k = r$. For that subset, Eqs. (1) - (3), above, are expressed, respectively, as follows:

$$b = (r \times (r-1)) + 1 \qquad \text{Eq. 4}$$

$$b = (r \times (r-1)/2) + 1 \qquad \text{Eq. 5}$$

$$b = (r \times (r-1)/n) + 1 \qquad \text{Eq. 6}$$

By way of example, Hall, Jr. teaches a symmetric solution for ($k$) = 4, ($v$) = 7 and ($n$) = 2. That solution, referred to as a biplane, is written as follows:

Table 3

| 3 | 5 | 6 | 7 |
|---|---|---|---|
| 4 | 6 | 7 | 1 |
| 5 | 7 | 1 | 2 |
| 6 | 1 | 2 | 3 |
| 7 | 2 | 3 | 4 |
| 1 | 3 | 4 | 5 |
| 2 | 4 | 5 | 6 |

This teaching can be applied to the practice of the invention to derive, for example, a sparse two-way interconnect structure by designating the columns of this matrix as ports, "a" through "d," the rows as nodes, "A" through "G," and the numerical entries themselves as bus lines "1" through "7" to produce the following interconnect table:

Table 4

| | | Port | | | |
|---|---|---|---|---|---|
| | | a | b | c | d |
| Node | A | 3 | 5 | 6 | 7 |
| | B | 4 | 6 | 7 | 1 |
| | C | 5 | 7 | 1 | 2 |
| | D | 6 | 1 | 2 | 3 |
| | E | 7 | 2 | 3 | 4 |
| | F | 1 | 3 | 4 | 5 |
| | G | 2 | 4 | 5 | 6 |

Consistent with the discussions above, Table 4 can denote a configuration for an interconnect structure, as shown in Figure 3.

It will be appreciated that further sparse bus interconnect arrays according to the invention can be similarly derived from other balanced incomplete block design solutions, both symmetric and otherwise.

Communication characteristics of the disclosed interconnect structures can be optimized by rearranging specific port-to-port connections in view of the physical characteristics of the connecting elements. In particular, communications over the sparse bus array shown in Figure 3 are preferably improved by modifying the array configuration to so that all buses are of substantially equal length.

Such modification can be effected, in one instance, by trial-and-error rearrangement of the ports and buses of a prototype system and, preferably, by interactive switching of the rows and columns of matrices of the type shown in Tables 1, 2 and 4. The bus lengths of the corresponding physical systems, which can be calculated from the actual port and node spacings, are compared to identify the most optimal configuration.

Thus, for example, a computer program can be designed to find optimal equal bus-length configurations by first calculating the lengths of buses required to implement a structure corresponding to Table 4 and retaining the results of that calculation, e.g., the mean bus length and standard deviation, for comparison with the results of similar calculations performed for other configurations. To wit, such a program can exchange column "a" of the table with column "b," and calculate the lengths of buses for the corresponding structure. If more optimal, these new results can be retained in place of the original results. Column "a" can then be exchanged with column "c", a further calculation and comparison performed; and so forth. Using this method, it is understood that there are roughly 120,000 possible combinations to be evaluated to determine the best configuration for a two-way interconnected seven-board, four-port system corresponding to Table 4.

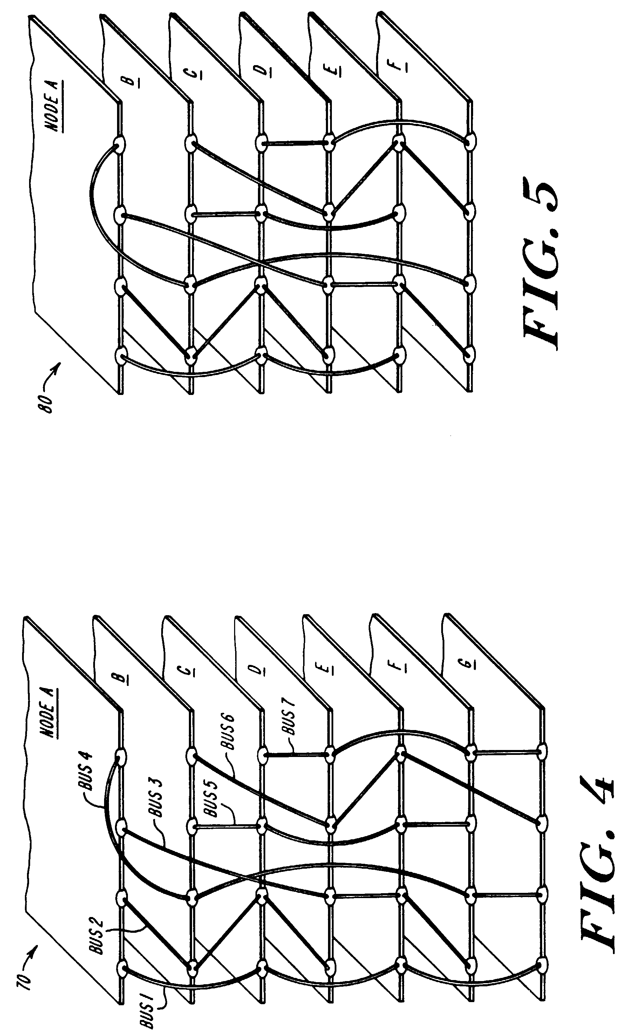

A matrix representing an optimal configuration as determined using the aforementioned method is shown below. The structure corresponding to the matrix is shown in Figure 4.

Table 5

| | | Port | | | |
|---|---|---|---|---|---|
| | | a | b | c | d |
| Node | A | 1 | 2 | 3 | 4 |
| | B | 2 | 4 | 5 | 6 |
| | C | 1 | 2 | 5 | 7 |
| | D | 2 | 3 | 6 | 7 |
| | E | 1 | 3 | 5 | 6 |
| | F | 3 | 4 | 5 | 7 |
| | G | 1 | 4 | 6 | 7 |

Those skilled in the art will appreciate the difficulties inherent in attempting to realize a sparse bus configurations of the type shown in Figure 4 using buses that have a large number of conductors. In such instances, it is preferred to align and connect individual pins of each port, rather than the ports themselves, in the manner shown in Figure 4. Those skilled in the art will further realize that the techniques described above can be applied to optimize sparse bus configurations based on any physical characteristics of the underlying connection elements.

The sparse bus interconnect structures shown in the Figs. 1 - 4 are fully populated, i.e., that each bus is equally loaded. Thus, for example, the seven nodes of the multiprocessing system depicted in Fig. 1 are coupled via a one-way interconnect structure of seven buses, each supporting four nodes, while the four nodes of the system depicted in Fig. 2 are coupled via a two-way interconnect structure of four buses, each supporting three nodes. Optimization of the transmission characteristics of interconnect structures such as these are not restricted by the transmission limitations of any one bus. Thus, for example, no single bus will suffer capacitive loading limitations before the others.

Those skilled in the art will nevertheless appreciate that structures having the characteristics and features of the illustrated embodiments, and including less or more nodes also fall within the scope the invention.

Figure 5 shows one example of such a multinodal system. That system 80, having only six nodes A - F, includes a seven-element interconnect structure similar to that of the seven-node system shown in Figure 4. Here, however, the illustrated system 80 is configured so that not all of the buses couple corresponding ports of the same number of nodes. The two systems operate identically, except that the interface sections within each node of the system 80 in Figure 5 are not enabled to permit the routing of communications to the missing seventh node. In practice, the system 80 can be designed to accommodate a seventh node, in which case the nodal interface sections must be reenabled to route communications to the additional node.

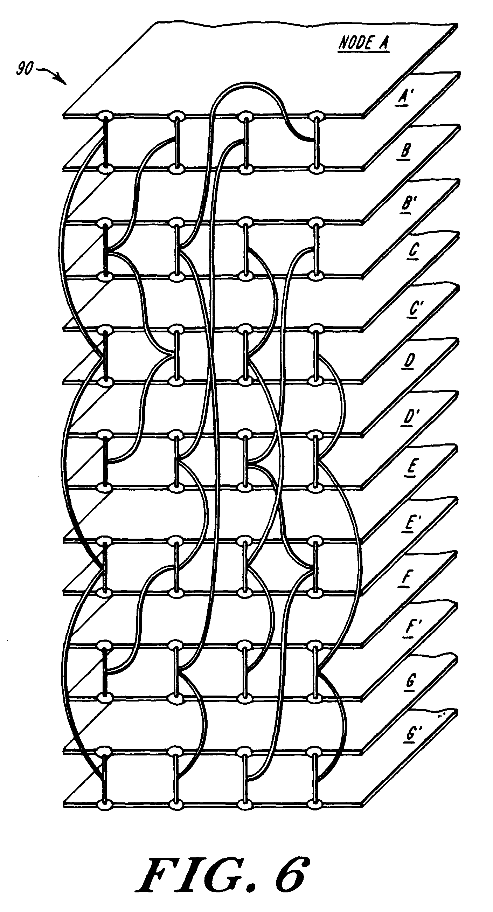

Another example is provided in Figure 6. Here, the interface structure of the system shown in Figure 4 is applied to a multinodal system 90 having fourteen nodes, double the number presented in that original illustration. Figure 6 has nodes A, A', B, B', . . ., and G, G', which represent paired, redundant functional units constructed in accord with the teachings of aforementioned United States patents and patent applications. Nodes A and A', for example, are coupled to others in the system to receive identical input signals and to operate substantially synchronously and simultaneously to produce identical output signals. Thus, whereas the two-way interconnect structure featured by the systems illustrated in both Figures 4 and 6 provide fault-tolerant communication pathways, the system of Figure 6 additionally provides fault-tolerant processing capabilities.

Those skilled in the art will appreciate that by way of example: sparse bus systems with more than two degrees of interconnectedness, e.g., three-way and four-way interconnect systems; sparse bus interconnect systems whose configurations are not derived from currently known balanced incomplete design block solutions; and sparse bus interconnect systems optimized to improve communications in ways other than by having substantially identical bus lengths, also fall within the scope of the invention.

**Claims**

1. Multinodal apparatus (10) having v nodes, each for performing a selected operation where v is an integer greater than or equal to four characterised by

A. b bus means (26-38), each being associated with and coupled to three or more of said nodes (12-24) for communicating information-representative signals between said nodes, with communication on each of said bus means being independent of communications on each other bus means, said b bus means being configured so that

i) each node is connected with each respective other node by at least $n$ said bus means,
ii) no single node is connected to all other nodes by a single bus means, and
iii) at least one of said b bus means is connected to at least three or more of said nodes,

B. each said node having $r$ port means (12a, 12b,12c,---,24a,24b,24c), each connected with that node and with one of associated bus means for providing a coupling interface therebetween, and
C. where $n$ and $r$ are positive integers selected such that the mathematical relation

$$b = \frac{r \times v}{\dfrac{n \times (v - 1)}{r} + 1}$$

provides a positive integer b, defining the number of said bus means.

2. Apparatus (10) as claimed in claim 1, characterised in that the apparatus (10) is digital data processing apparatus, each said node (12-24) includes at least one of central processing means (12,14,16) for processing information-representative signals or memory means (24) for storing and/or retrieving information-representative signals or peripheral controller means (20,22) for controlling communications with a peripheral device, and said bus means comprises connection means.

3. Apparatus (10) as claimed in any preceding claim, characterised in that said b bus means (26-38) are connected with said port means (12a,12b,12c,---, 24a,24b,24c) in a configuration based upon solutions derived from balanced incomplete block design, where said port means are related to columns of said solution and said nodes (12-24) are related to rows of said solution.

4. Apparatus (10) as claimed in any preceding claim characterised in that
said b bus means (26-38) are of substantially the same length.

5. Apparatus (10) as claimed in any preceding claim, characterised in that n is equal to one.

6. Apparatus (10) as claimed in claim 5, characterised in that r is a positive integer selected such that the mathematical relation

$$b = r \times (r - 1) + 1$$

provides a positive integer b, defining the number of said bus means (26-38), and satisfying the additional constraint that v=b.

7. Apparatus (10) as claimed in any preceding claim, characterised in that at least one said b bus means (26-38) is connected for communication with a different number of said r port means (12a,12b,12c,---, 24a,24b,24c) than another said b bus means.

8. Apparatus (10) as claimed in any of claims 1 to 4, characterised in that n is equal to two.

9. Apparatus (10) as claimed in claim 8, characterised in that r is a positive integer and selected such that the mathematical relation

$$b = (r \times (r - 1)/2) + 1$$

provides a positive integer b, defining the number of said bus means (26-38), and satisfying the additional constraint that v=b.

10. Apparatus (10 as claimed in claim 8, characterised in that each said b bus means (26-38) is connected for communication with the same number of said r port means (12a,12b,12c,---,24a,24b,24c).

11. Apparatus (10) as claimed in claim 8, characterised in that so that each said node (12-24) is connected for communication to each other node by at least two said b bus means (26-38).

12. Apparatus (10) as claimed in claim 11, characterised in that at least two said nodes (12-24) are coupled to one another and to said bus means (26-38) so as to receive information-representative signals on said bus means from others of said nodes identically with each other.

13. Apparatus (10) as claimed in any preceding claim, characterised in that the apparatus is a system of data processing devices, at least two of said nodes (12-24) include the capability for the read-in and/or the read-out of data, by way of said bus means (26-38), independent of any other of said nodes or of another data processing device.

**Patentansprüche**

1. Mehrknotige Vorrichtung (10) mit v Knoten, jeder für die Ausführung einer gewählten Operation, wobei *v* ein ganze Zahl größer oder gleich vier ist, gekennzeichnet durch:

   A. *b* Buseinrichtungen (26 bis 38), wovon jede drei oder mehr von diesen Knoten (12 bis 24) zugeordnet und damit verbunden ist, um Informations-repräsentative Signale zwischen den Knoten auszutauschen, wobei der Kommunikationsvorgang an jeder Buseinrichtung unabhängig von Kommunikationsvorgängen an allen anderen Buseinrichtung ist und die *b* Buseinrichtungen so konfiguriert sind, daß:

   i) jeder Knoten mit jedem entsprechendem Knoten über mindestens *n* von den Buseinrichtungen verbunden ist,
   ii) kein einziger Knoten mit allen anderen Knoten über nur eine einzige Buseinrichtung verbunden ist, und
iii) mindestens eine von den *b* Buseinrichtungen mit mindestens drei cder mehr von den Knoten verburden ist,

   B. jeder von den Knoten r Porteinrichtungen (12a, 12b, 12c, --- 24a, 24b, 24c) aufweist, wovon jede mit diesem Knoten und mit einer von zugeordneten Buseinrichtungen verbunden ist, um einen Kopplungsschnittstelle zwischen diesen bereitzustellen, und
   C. wobei *n* und *r* positive ganze Zahlen sind, welche so gewählt sind, daß die mathematische Beziehung

$$b = \cfrac{r \times v}{\cfrac{n \times (v - 1)}{r} + 1}$$

   eine positive ganze Zahl *b* liefert, welche die Anzahl der Buseinrichtungen definiert.

2. Vorrichtung (10) nach Anspruch 1, dadurch gekennzeichnet, daß die Vorrichtung (10), eine digitale Datenverarbeitungsvorrichtung ist, jeder Knoten (10 bis 24) mindestens eine zentrale Verarbeitungseinrichtung (12, 14, 16) für die Verarbeitung Informations-repräsentativer Signale oder eine Speichereinrichtung (24) zum Speichern und/oder Zurückholen Informations-repräsentativer Signale oder eine Peripherie-Steuerungseinrichtung (20, 22) zum Steuern von Kommunikationsvorgängen mit einem Peripheriegerät aufweist, und die Buseinrichtung eine Verbindungseinrichtung aufweist.

3. Vorrichtung (10) nach einem der vorstehenden Ansprüche, dadurch gekennzeichnet, daß die *b* Buseinrichtungen (26 bis 38) mit den Porteinrichtungen (12a, 12b, 12c, --- 24a, 24b, 24c) in einer Konfiguration verbunden sind, die auf Lösungen basiert, welche von einer symmetrischen unvollständigen Blockkonstruktion abgeleitet sind, wobei die Porteinrichtungen Spalten der Lösung zugeordnet sind und die Knoten (12 bis 24) Reihen der Lösung zugeordnet sind.

4. Vorrichtung (10) nach einem der vorstehenden Ansprüche, dadurch gekennzeichnet, daß die *b* Buseinrichtungen (26 bis 38) im wesentlichen dieselbe Länge aufweisen.

5. Vorrichtung (10) nach einem der vorstehenden Ansprüche, dadurch gekennzeichnet, daß *n* gleich eins ist.

6. Vorrichtung (10) nach Anspruch 5, dadurch gekennzeichnet, daß *r* eine positive ganze Zahl ist, die so gewählt ist, daß die mathematische Beziehung

$$b = r \times (r - 1) + 1$$

eine positive ganze Zahl $b$ liefert, welche die Anzahl der Buseinrichtungen (26 bis 38) definiert, und die zusätzliche Bedingung, daß $v = b$ ist, erfüllt.

7. Vorrichtung (10) nach einem der vorstehenden Ansprüche, dadurch gekennzeichnet, daß mindestens eine von den $b$ Buseinrichtungen (26 bis 38) zur Kommunikation mit einer unterschiedlichen Anzahl der $r$ Porteinrichtungen (12a, 12b, 12c, --- 24a, 24b, 24c) als die anderen $b$ Buseinrichtungen verbunden ist.

8. Vorrichtung (10) nach einem der Ansprüche 1 bis 4, dadurch gekennzeichnet, daß n gleich zwei ist.

9. Vorrichtung (10) nach Anspruch 8, dadurch gekennzeichnet, daß $r$ eine positive ganze Zahl ist und so gewählt ist, daß die mathematische Beziehung

$$b = (r \times (r - 1)/2) + 1$$

eine positive ganze Zahl $b$ liefert, welche die Anzahl der Buseinrichtungen (26 bis 38) definiert, und die zusätzliche Bedingung, daß $v = b$ ist, erfüllt.

10. Vorrichtung (10) nach Anspruch 8, dadurch gekennzeichnet, daß jede von den $b$ Buseinrichtungen (26 bis 38) zur Kommunikation mit derselben Anzahl von den $r$ Porteinrichtungen (12a, 12b, 12c, --- 24a, 24b, 24c) verbunden ist.

11. Vorrichtung (10) nach Anspruch 8, dadurch gekennzeichnet, daß jeder Knoten (12 bis 24) zur Kommunikation mit jedem anderen Knoten mit über mindestens zwei von den $b$ Buseinrichtungen (26 bis 38) verbunden ist.

12. Vorrichtung (10) nach Anspruch 11, dadurch gekennzeichnet, daß mindestens zwei Knoten (12 bis 24) miteinander und mit den Buseinrichtungen (26 bis 38) verbunden sind, um so Informations-repräsentative Signale auf den Buseinrichtungen von anderen der untereinander identischen Knoten zu erhalten.

13. Vorrichtung (10) nach einem der vorstehenden Ansprüche, dadurch gekennzeichnet, die Vorrichtung ein System Daten verarbeitender Geräte ist, wobei mindestens zwei von den Knoten (12 bis 24) die Fähigkeit für das Einlesen und/oder Auslesen von Daten mittels den Buseinrichtungen (26 bis 38) unabhängig von jedem anderen Knoten oder einem anderen Daten verarbeitenden Gerät aufweisen.

## Revendications

1. Appareil multinodal (10) ayant v noeuds, chacun pour réaliser une opération sélectionnée où v est un entier supérieur ou égal à quatre, caractérisé par :

A) b moyens de bus (26-38), chacun étant associé et couplé à trois ou plus desdits noeuds (12-24) pour communiquer des signaux d'informations représentatives entre lesdits noeuds, avec une communication sur chacun desdits moyens de bus indépendante des communications sur chaque autres moyens de bus, lesdits b moyens de bus étant configurés de sorte que :

i) chaque noeud est relié avec chaque autre noeud respectif par au moins n dits moyens de bus,
ii) aucun noeud unique n'est relié à tous les autres noeuds par un unique moyen de bus, et
iii) au moins un desdits b moyens de bus est relié à au moins trois ou plus desdits noeuds,

B) chaque dit noeud ayant r moyens de port (12a,12b,12c,---, 24a,24b,24c), chacun connecté à ce noeud et à un desdits moyens de bus associés pour fournir une interface de couplage entre eux, et
C) où n et r sont des entiers positifs sélectionnés de sorte que la relation mathématique

$$b = \frac{r \times v}{\frac{n \times (v\text{-}1)}{r} + 1}$$

fournit un entier b positif définissant le nombre desdits moyens de bus.

2. Appareil (10) selon la revendication 1, caractérisé en ce que l'appareil (10) est un appareil de traitement de données numériques, chaque dit noeud (12-24) inclut au moins un des moyens de traitement central (12,14,16) pour traiter des signaux d'informations représentatives ou des moyens de mémorisation (24) pour stocker et/ou extraire des signaux d'informations représentatives ou des moyens de commande de périphériques (20,22) pour commander des communications avec un dispositif périphérique, et lesdits moyens de bus comprennent des moyens de connexion.

**3.** Appareil (10) selon l'une quelconque des revendications précédentes, caractérisé en ce que lesdits b moyens de bus (26-38) sont reliés auxdits moyens de port (12a,12b,12c,---, 24a,24b,24c) dans une configuration fondée sur des solutions dérivées d'une conception en bloc incomplète équilibrée, où lesdits moyens de port sont relatifs à des colonnes de ladite solution et lesdits noeuds (12,24) sont relatifs à des rangées de ladite solution.

**4.** Appareil (10) selon l'une quelconque des revendications précédentes, caractérisé en ce que lesdits b moyens de bus (26-38) sont sensiblement de la même longueur.

**5.** Appareil (10) selon l'une quelconque des revendications précédentes, caractérisé en ce que n est égal à un.

**6.** Appareil (10) selon la revendication 5, caractérisé en ce que r est un entier positif sélectionné de sorte que la relation mathématique

$$b = r \times (r-1) + 1$$

fournit un entier positif b définissant le nombre desdits moyens de bus (26-38) et satisfaisant la contrainte additionnelle v = b.

**7.** Appareil (10) selon l'une quelconque des revendications précédentes, caractérisé en ce qu'au moins un desdits b moyens de bus (26-38) est relié pour communiquer avec un nombre différent desdits r moyens de port (12a,12b,12c,---, 24a,24b,24c) d'un autre desdits b moyens de bus.

**8.** Appareil (10) selon l'une quelconque des revendications 1 à 4, caractérisé en ce que n est égal à deux.

**9.** Appareil (10) selon la revendication 8, caractérisé en ce que r est un entier positif et sélectionné de sorte que la relation mathématique

$$b = (r \times (r - 1)/2) + 1$$

fournit un entier positif b définissant le nombre desdits moyens de bus (26-38) et satisfaisant la contrainte additionnelle v = b.

**10.** Appareil (10) selon la revendication 8, caractérisé en ce que chaque dits b moyens de bus (26-38) est relié pour communiquer avec le même nombre desdits r moyens de port (12a,12b,12c, ---, 24a,24b, 24c).

**11.** Appareil (10) selon la revendication 8, caractérisé en ce que chaque dit noeud (12-24) est relié pour communiquer avec chaque autre noeud par au moins deux desdits b moyens de bus (26-38).

**12.** Appareil (10) selon la revendication 11, caractérisé en ce qu'au moins deux desdits noeuds (12-24) sont couplés l'un à l'autre et auxdits moyens de bus (26-38) de manière à recevoir des signaux d'informations représentatives sur lesdits moyens de bus depuis d'autres desdits noeuds, de manière identique l'un avec l'autre.

**13.** Appareil (10) selon l'une quelconque des revendications précédentes, caractérisé en ce que l'appareil est un système de dispositifs de traitement de données, au moins deux desdits noeuds (12-24) incluent la possibilité de lecture et/ou d'enregistrement de données au moyen desdits moyens de bus (26-38) indépendamment de tout autre desdits noeuds ou autre dispositif de traitement de données.

*FIG. 1*

**FIG. 2**

**FIG. 3**

EP 0 398 678 B1

*FIG. 5*

*FIG. 4*

**FIG. 6**